# EUROPEAN PATENT APPLICATION

(11) **EP 2 521 043 A1**
(43) Date of publication of application: **07.11.2012**
(21) Application number: 09852763.3
(22) Date of filing: 30.12.2009
(51) Int. Cl.: G06F 17/30

(54) **METHOD FOR ESTABLISHING A RELATIONSHIP BETWEEN SEMANTIC DATA AND THE RUNNING OF A WIDGET**

(71) Applicant: Telefónica, S.A., 28013 Madrid (ES)
(72) Inventor: VILLOSLADA DE LA TORRE, Eduardo, E-47007 Valladolid (ES); MARTÍNEZ ELICEGUI, Javier, E-37005 Salamanca (ES); ORTEGA BARRADO, Pedro José, E-28005 Madrid (ES)
(74) Representative: Carpintero Lopez, Francisco
(86) International application number: PCT/ES2009/070643
(87) International publication number: WO 2011/080360

(57) **Abstract**

The present invention relates to a method for automatically establishing the relationship between the semantic data of an information source with running widgets using said data as input parameters. On one hand, the method comprises establishing the configuration by means of selecting the parts of the information source which will be used as input parameters of the widgets, identifying which widgets will be initialised with said parameters, choosing the mode of sharing that information; and on the other hand, using the configuration information for running the widget with the aforementioned parameters.

Various applications are therefore integrated automatically, widgets being run based on the web page content and without user intervention, which allows integrating applications at runtime.

## Description

### Object of the Invention

As expressed in the title of this specification, the present invention relates to a method for automatically establishing a relationship between semantic data originating from a semantic information source which is either a web page, a desktop or a mobile web, and running at least one widget using the data obtained from the mentioned information sources as running parameters of said widgets. The field of application of said invention is telecommunications.

### Background of the Invention

A widget is a usually simple and single-purpose component the visual part of which is of special importance, which is distributed through the Internet and run in a container.

There are different approaches which could be classified as follows:
● Desktop widgets in which the container is run in the PC itself,
● Web widgets in which the container is run in a web server,
● Mobile widgets in which the container is run in a mobile device.

Without taking into account the type of container, the technological basis on which widgets are supported is the same as that used for creating web pages (HTML, CSS and Javascript), facilitating the development and quick acceptance by users.

The functionality can fall only on the client side or it can use services on the server side by means of Asynchronous Javascript (AJAX) or Apis Javascript for different platforms.

For example, some typical widgets are:
● A widget showing the weather forecast of a location being run in a container but receiving the data from an outside source,
● A sales widget, showing the prices of a product,
● A currency exchange widget,
● A widget showing the news or comments of an information source.

Therefore, in general terms, it can be said that creating a widget using a service is easy.

Examples of widgets which do not use a server could be:
● A widget showing the time,
● A widget storing and showing a list of pending tasks.

Each of the platforms is responsible for the aspects of authority, security, distribution, rolling out and internationalizing in a different manner and although there is a standardisation initiative put forth by W3C, it is still being developed.

Regardless of whether web pages are static or dynamic and of the technology on which they are based, they are typically aimed at end users. Although this feature favours appearance, which helps the user understand the information, it is more difficult for machines to understand it.

For example, the fact that an Internet page contains a telephone number is not enough for a computer to understand that it is a telephone number. It is only a series of numbers for the computer, such that the computer will only know that it is a telephone number if said numbers are entered semantically.

Taking this into account, the term Semantic Web entails a group of technologies the objective of which is to represent the meaning of concepts relating to web pages. Some of these technologies are the following:
● Resource Description Framework (RDF), World Wide Web Consortium (W3C) standard having statements about web resources in the form of subject-predicate-object (triplets),
● Resource description framework in attributes (RDFa), W3C standard which is a set of XHTML extensions. A mapping is defined so that the RDF triplets can be extracted.
● Gleaning Resource Descriptions from Dialects of Languages (GRDDL) is a W3C recommendation enabling users to use RDF in documents with Extensible Markup Language (XML) and with Extensible Hypertext Markup Language (XHTML) by means of Extensible Stylesheet Language Transform (XSLT) technology.
● Microformats is a simple way of adding semantic meaning to web pages using specific names by classes, such as contact information, social relationships or addresses.

Despite the standardisation of those technologies, in practice they are not widely used, taking us back to the beginning in terms of machines not understanding web pages.

Under these circumstances, other initiatives have appeared for the purpose of structuring the information of the pages which are downloaded by users, adding meta-information to each page by means of markups. Some examples of such tools are the following:
● Annotea is a W3C initiative based on web markups for the AMAYA web editor;
● Annozilla designed for seeing and creating markups associated with the web page, such as those defined by the W3C Annotea project. The idea is to store the markups such as those of RDF in a server, using XPointer (or at least XPointer as the construct) for identifying the region of the document which is being marked up;
● Semantic web markup system, which was developed as part of a semantic web project by the data and knowledge engineering (DAKE) group. It can be stored in servers public such that any user can share their comments on a specific web page;
● Trellis, the users are not only capable of marking up the information themselves, but they will also be capable of marking up the relationships among themselves;
● Solvent, Firefox extension for carrying out data extraction adding metadata.

When a user wants to associate a widget with a page, different strategies which can be used for the purpose of selecting the parts of the page which will be used as running parameters can be implemented. Non-exclusive examples of the content selection criteria are by the position on the page, the format thereof, the exact identification of the content or taking the semantic information of the page into account, regardless of whether this information is previously available or is retrieved by semantic markup techniques.

However, there are still problems with the existing solutions. In general, it is not possible to configure widgets when they are run nor is it common for the containers to support receiving events sent by the widgets. Furthermore, except in the case of semantic widgets, these instantiation parameters or event communications generally do not take advantage of the existence of semantic information when run in the platform. However, the case in which the semantic content of the pages is used as the origin of the parameters for linking pages and widgets at the time of running does not exist.

For these reasons it is now not possible to automate running widgets based on the information of a page because for a user to be able to see a widget with all this information of the pages, the user must configure it manually every time said page is loaded.

Furthermore, the usual solutions do not take into account the semantics of the pages and the election of the widgets which are run is characterised by its rigidity and the integration is done statically at the time of the design. In an environment such as that of web applications, greater flexibility would be desirable: with the same information or many widgets in which a user may be interested being able to exist at different times. There can also be flexibility limitations in the social dimensions of running the widgets: the same widget can be of interest for various user groups.

Intel® has recently developed a platform called Intel Mash Maker which deals with the subject of running widgets from the data from web pages. The main difference with respect to the proposal described herein is that it does not use the semantic information existing in the pages, nor in the parameterization of the widgets, which does not allow truly automating the connection between the data of the pages and the widgets.

Paggr® is developing a platform for running semantic widgets but the semantic connection is carried out between widgets, not with the semantic information of the web pages.

W3C is standardising the configuration properties used by the platforms for creating widgets, but again, the semantic fields are not considered.

Apple® has a patent on widgets and devices (WO 2008/086060 A2) but it focuses on integration using the touch-sensitive capacities of devices, not the semantic capacities.

Apple® has also developed a patent on user-centric widgets (WO 2009/012319 A2) where the widgets which are run depend on a developed user model, being able to update the state of the widget as the state of the user model changes. The main differences with respect to the invention are that neither the user model nor the widgets uses the semantics of the pages (same case as before). Furthermore, the model viewpoint is only personal, without transferring the gleaning information between different users.

### Description of the Invention

Including widgets in web pages will allow showing information relating to the data of said pages at the same time the widgets are run. Considering usability, it is convenient that the connection between the contents of the web pages and running widgets does not imply user actions such that they can be included quickly and efficiently. To meet this objective, it is necessary that these widgets can be configured when they are run and their parameters can be easily retrieved from the web pages, and to that end the easiest way is by using semantic data.

With the mentioned method, the aforementioned limitations are overcome such that various applications can be integrated automatically by running widgets based on the web page content and without user intervention.

On the other hand, the model allows integrating applications at runtime, providing considerable flexibility, since each user decides to run different widgets for the same semantic information without needing to perform any modification. It is also considered that a group of users could have similar running preferences.

There must previously be customised widget catalogues where the widgets are characterised by being parameterisable, capable of instantly receiving events and can modify their behaviour such that data from a widget in the catalogue can be added, modified or deleted. There will further be a semantic information source selected from a web page, a desktop and a mobile web.

These parameters can be identified as concepts, for this reason a relationship between the content of the page and the parameters of the widget can be established.

The moment in which the widgets and the information of the web page are associated can vary, for example: the association can be established when the contents of the page are identified as parameters, the widgets receiving these parameters as input being selected as the preferred widgets. Another example would be selecting the widget at runtime. Another option would be selecting based on user group preferences. Once the content of the page which will be used as parameters is identified, and once the widgets which will be used are also identified, it is possible to store the information in a customised manner or to establish strategies for spreading information to another user or user groups.

Thus, the pertinent information for each page, how the information is linked with the widgets of the catalogue and how it is distributed to the remaining users are stored in a repository.

Under these circumstances, when a user loads a web page with markups, the user can retrieve the metadata of the pages from the memory, and it can make a direct request for a widget, using the specific values of the concepts in the pages as input parameters.

Thus, the method described herein automatically establishes a relationship between semantic data and running a widget with this data as input parameters, which is characterised in that it comprises the following phases:
- selecting the parts of the source from where the input parameters of a widget are obtained,
- selecting at least one widget from the catalogue,
- choosing a mode of sharing the information obtained from selecting the parts of the source from users or user groups,
- establishing the configuration of the widgets by means of said prior selection,
- storing this information relating to the information source in a memory space,
- retrieving this information relating to the information source from said memory space,
- extracting the useful information from the parts of the page which have been selected,
- using the configuration information for extracting the input parameters obtained,
- running the widget with said input parameters.

Furthermore, the phase of selecting the widget in turn comprises the following steps:
- filtering the widget catalogue depending on the useful information obtained from the web page,
- the user choosing the widget of interest from among those resulting from the filtering phase.

When the information source does not contain semantic information, it comprises an additional phase prior to the phase of selecting the parts of the source consisting of structuring the data of said source by means of identifying same with the semantic data, depending on a criteria selected from:
● the global position thereof,
● the relative position thereof, and
● the format thereof,
for thus generating a meta-information structure from which the input parameters of the widget are directly obtained.

During the phase of extracting the useful information of the method described above, when the widgets are run in a web page, the semantic information of the page is used for extracting the useful information which is used as input parameters of the widgets. Likewise, when the widgets are run in a semantic desktop, the semantic information of the desktop is used for extracting the useful information which is used as input parameters of the widgets. And when the widgets are run in a semantic mobile web, the semantic information of the web is used for extracting the useful information which is used as input parameters of the widgets.

In the phase of choosing a mode of sharing the useful information extracted from the source and the selected widgets, said selection is made in a manner selected from:
● establishing the information as personal information so that not just any user can access it.
● establishing the information as group information so that a user not belonging to the group cannot access it.
● establishing the information as global information so that any user can access it.

A series of possible scenarios described below have been contemplated for the invention:

### 1. A web page without semantic information.

If a web page does not contain semantic information a first step is necessary, said step consisting of the user structuring the data of the web page, i.e., the user identifies the data of the page with the semantic data based on the global or relative position thereof or the format thereof. Once the web page is structured, this semantic information allows the user to filter the widgets of the catalogue to later run and obtain the values of the parameters for connecting the web page with the semantic widgets.

This meta-information is stored in a memory so that it can be used by the same page the next times. The memory could be a file, a relational database management system (RDBMS), a storage cloud, or any other technology which allows storing and retrieving said meta-information.

When the user loads a web page, as a result of the meta-information structure, it is possible to obtain the semantics of the page for filtering the widgets having such data as input variables. Once a widget to be used is selected, the values for running it are obtained directly from the meta-information structure.

### 2. A web page with RDFa technology.

This case is similar to scenario 1, but the web page contains semantic information using RDFa technology, so it is not necessary, although it is possible, to structure the page. This information helps the user to filter the widgets of the catalogue to later run and obtain the values of the parameters for connecting the web page with the semantic widgets.

When the user loads the web page, as a result of the semantic information of the RDFa data, it is possible to filter the widgets having such data as input variables. Once a widget is selected for use, the values for running it are obtained directly from the RDFa data.

### 3. A web page with GRDDL technology.

As in scenario 1, but if the web page contains semantic information using GRDDL, it is not necessary, although it is possible, to structure the page. This information helps the user to filter the widgets of the catalogue to later run and obtain the values of the parameters for connecting the web page with the semantic widgets.

When the user loads the web page, as a result of the semantic information extracted from GRDDL, it is possible to filter the widgets having such data as input variables. Once a widget is selected for use, the values for running it are obtained from the data extracted from GRDDL.

### 4. A web page with microformats.

As in scenario 1, when the web page contains semantic information using microformats, it is not necessary, although it is possible, to structure the page. This information helps the user to filter the widgets of the catalogue to later run and obtain the values of the parameters for connecting the web page with the semantic widgets.

When the user loads the web page, as a result of the semantic information of the microformats, it is possible to filter the widgets having such data as input variables. Once a widget is selected for use, the values for running it are obtained directly from the microformat data.

### 5. A web page with other semantic technologies.

As in scenario 1, when the web page contains semantic information using other semantic technologies, it is not necessary, although it is possible, to structure the page. This information helps the user to filter the widgets of the catalogue to later run and obtain the values of the parameters for connecting the web page with the semantic widgets.

When the user loads the web page, as a result of the semantic information of the page, it is possible to filter the widgets having such data as input variables. Once a widget is selected for use, the values for running it are obtained directly from the semantic data of the page.

### 6. A semantic desktop.

If the desktop allows structuring the data of the desktop or the applications which are run in it, its semantic information allows the user to filter the widgets of the catalogue to later run and obtain the values of the parameters for connecting the applications and widgets.

When the user uses some of these applications or the desktop, if they have semantic information, it is possible to filter the widgets having such data as input variables. Once a widget is selected for use, the values for running it are obtained directly from the semantic data of the applications or the desktop.

### 7. A semantic mobile web.

If the mobile allows structuring the mobile data or the applications which are run in it, its semantic information helps the user to filter the widgets of the catalogue to later run and obtain the values of the parameters for connecting the applications and widgets.

When the user uses some of these applications or the mobile device, if they have semantic information, it is possible to filter the widgets having such data as input variables. Once a widget is selected for use, the values for running it are obtained directly from the semantic data of the applications of the mobile.

### 8. Widget association when the data are structured.

As in scenarios 1 to 7, when the user sees the data structure of the resources, depending on the amount of semantic data, it is possible to apply some or many widgets which fit with all or some of the semantic data available. To facilitate usability, it should be possible to choose the preferred widgets that apply to this resource.

When the user accesses said resource several times, the widgets for a preferred application are known, so it will be the first option to be presented.

### 9. Widget association when accessing the resources.

As in scenarios 1 to 7, when a user accesses a resource having a data structure, which does not have preferred widgets, or said preferred widgets are not of interest for the user, it should be possible to choose other widgets to be shown, according to the structure of the available data. This information must be stored for the next times the user accesses the resources.

### 10. Widget association based on user group preferences.

As in scenarios 1 to 7, when a user accesses a resource with a data structure, which does not have preferred widgets, or they are not of interest for the user, it should be possible to choose other widgets to be shown, based on the preferred widgets of the different user groups.

### 11. Personal information widget.

As in scenarios 1 to 10, when the user establishes the data structure of interest, it should be possible establish such data as personal data, such that no one else can access this data structure. Likewise, when the user establishes the association with the preferred widgets, it should be possible to establish such data as personal data, such that no one else can access this information.

### 12. Group information widget.

As in scenarios 1 to 10, when the user establishes the data structure of interest, it should be possible to establish said data as group data, so that only people from certain user groups can access this data structure. Likewise, when the user establishes the association with the preferred widgets, it should be possible to establish such data as group data, so that only people from user groups can access this information.

### 13. Social information widget.

As in scenarios 1 to 10, when the user establishes the data structure of interest, it should be possible to establish such data as global data, such that everyone can access this data structure. Likewise, when the user establishes the association with the preferred widgets, it should be possible to establish such data as global data, therefore everyone should be able to access this information.

The advantages of the present invention with respect to the state of the art are mentioned below.

A new method in the field of services for integrating existing applications and web pages has been created based on reusing visual components (widgets). The main features of this method, which solves the limitations of the existing solutions, are a flexible, easy-to-use and completely decoupled solution for integrating functionalities.

It is a flexible way to integrate functionalities from the user viewpoint, since the same semantic information can be used with different widgets and by different users, and furthermore, since the widget catalogue can be administered, it is possible to add or delete new widgets if required due to particular needs.

It is easy to use because the main steps of the method are based on semantics:
● It is easy for administrators to use because the widgets to be chosen are filtered by means of the semantics;
● It is easy for common users to use because the values for running the widgets are automatically obtained directly from the underlying semantics, without any user interaction.

It is a way of completely decoupling the integration of functionalities since it is based on configuration options, and the users can decide where and how the integration is used at runtime, which is a more flexible approach compared with current integration strategies, which are performed during development or implementation.

### Brief Description of the Drawings

Figure 1 shows a typical life cycle diagram of a widget.
Figure 2 shows the diagram of the process of associating a widget with a user.
Figure 3 shows the running process diagram for a user that already has one or several associated widgets.

### Description of an Embodiment of the Invention

An illustrative and non-limiting description of an embodiment of the invention is given below making reference to the reference numbers used in the figures.

New functionalities are to be developed and they must be accessible in several applications, and the data of the client must further be accessible. Said functionality is invoked by each system using the same input data (for example, the telephone number).

Now, the solution given is that each system implements the same functionality (n times), therefore the cost of development is multiplied by the number of systems and the maintenance costs increase: integration of the functionality is static.

By contrast, by using the proposed model, it would only be necessary to implement a version of the functionality as a widget and semantically marking up the fields of each system to be used. The systems remain unchanged: integration of the new functionality is performed automatically in all the pages.

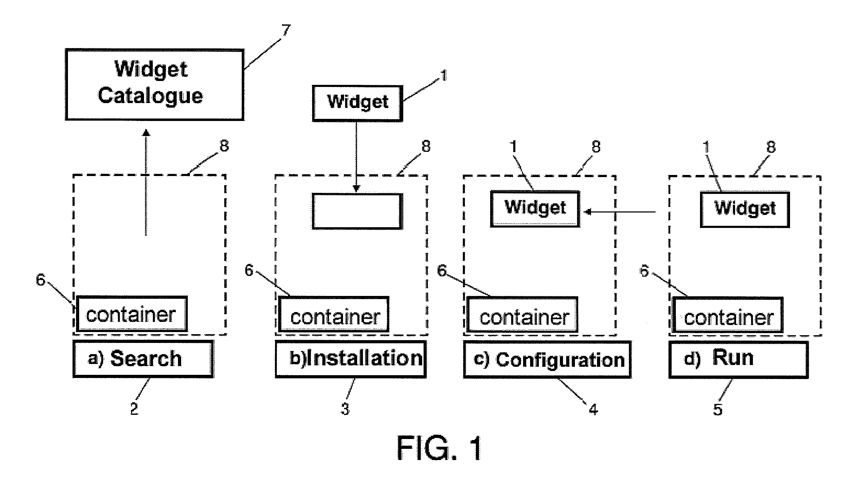

Figure 1 shows the typical life cycle of a widget comprising the search phase (2), installation phase (3), configuration phase (4) and run phase (5). The search phase comprises locating the widget (1) to be used by means of a search in a memory comprising the widget catalogue (7) or by means of other techniques such as a direct link to the widget. The installation phase comprises initialising the widget in a container (6) which involves downloading the client code in the container so that it is ready to be used. The configuration phase comprises configuring the widget. Said phase is optional and consists of modifying the behaviour of said widget. The run phase comprises running the widget. The phases described above are run by means of a human interface (8).

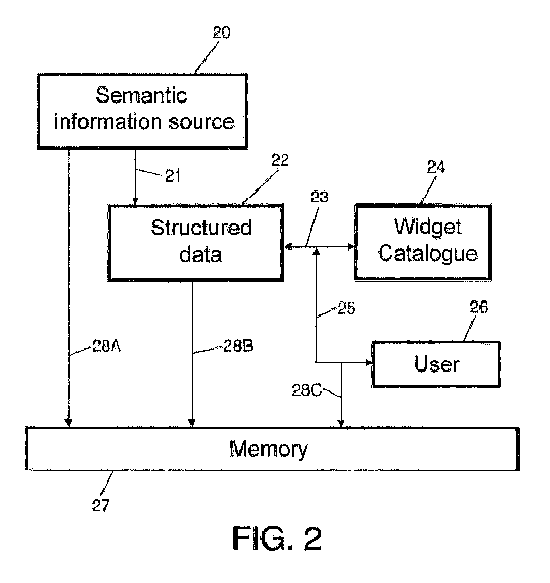

Figure 2 shows the diagram of the process of associating a widget with a user. The scenario could be described as follows: as the integration element, a user accessing each application identifies the parts of the semantic information source (20) represented by the data of interest which is converted (21) into structured data (22) (in this case the telephone number), and obtains widgets (23) from the catalogue (24) the input parameters of which are that field. The new widget of interest (Client Data) together with the users (26) that will use it (25) is then selected, and finally the data is stored in a memory (27) for later use (28A, 28B, 28C).

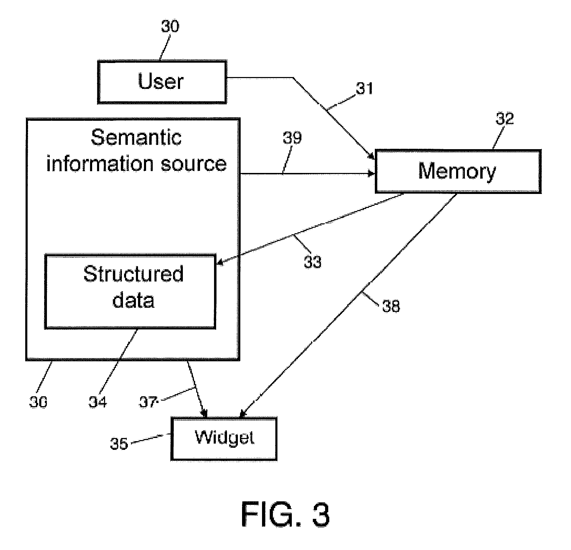

Figure 3 shows the diagram of the running process for a user that already has one or several associated widgets. When a user (30) enters an application, it is detected (31) and (39) that the page has a widget associated with that user by means of the data stored in the memory (32) and by means of the semantic information of the semantic information source (36), and it is possible to identify (33) which is the telephone through the structured data (34), and the widget (35) is therefore run automatically (37) and (38).

The cost is low and given the lack of dependence between systems, there are no maintenance costs.

Another possible scenario to consider is the continuation of the preceding example, where instead of a single widget, it is possible to have an ecosystem of widgets with independent and parameterisable functionalities. Therefore, in an existing application (or in as many as desired), it would be possible to flexibly add the functionality, where each user carries out the configuration according to needs, without having the developments of the application, but only the semantic markup.

## Claims

1. Method for automatically establishing a relationship between semantic data and running a widget, using the semantic data as run input parameters of the widget, previously providing a parameterisable widget catalogue with the capacity to instantly receive events and with the capacity to modify its behaviour, and further providing a semantic information source selected from a web page, a desktop and a mobile web, **characterised in that** it comprises the following phases:
- selecting the parts of the source from where the input parameters of a widget are obtained;
- selecting at least one widget from the catalogue;
- choosing a mode of sharing the information obtained from selecting the parts of the source selected from users and user groups;
- establishing the configuration of the widgets by means of said prior selection;
- storing this information relating to the information source in a memory space;
- retrieving this information relating to the information source from said memory space;
- extracting the useful information from the parts of the page which have been selected;
- using the configuration information for extracting the input parameters obtained; and,
- running the widget with said input parameters.

2. Method for automatically establishing a relationship between semantic data and running a widget according to claim 1, **characterised in that** the phase of selecting the widget comprises the following phases:
- filtering the widget catalogue depending on the useful information obtained from the web page; and,
- the user choosing the widget of interest from among those resulting from the filtering phase.

3. Method for automatically establishing a relationship between semantic data and running a widget according to claim 1, **characterised in that** when the web page does not contain semantic information it comprises an additional phase prior to the phase of selecting the parts of the web page consisting of structuring the data of the page by means of identifying same with the semantic data, depending on a criteria selected from:
● the global position thereof,
● the relative position thereof,
● the format thereof,
for generating a meta-information structure from which the input parameters of the widget are directly obtained.

4. Method for automatically establishing a relationship between semantic data and running a widget according to claim 1, **characterised in that** in the phase of extracting useful information, when the widgets are run in a web page the semantic information of the page is used for extracting the useful information which is used as input parameters of the widgets.

5. Method for automatically establishing a relationship between semantic data and running a widget according to claim 1, **characterised in that** in the phase of extracting the useful information, when the widgets are run in a semantic desktop, the semantic information of the desktop is used for extracting the useful information which is used as input parameters of the widgets.

6. Method for automatically establishing a relationship between semantic data and running a widget according to claim 1, **characterised in that** in the phase of extracting the useful information, when the widgets are run in a semantic mobile web, the semantic information of the web is used for extracting the useful information which is used as input parameters of the widgets.

7. Method for automatically establishing a relationship between semantic data and running a widget according to claim 1, **characterised in that** in the phase of choosing a mode of sharing the useful information extracted from the source and the selected widgets, said selection is made in a manner selected from:
● establishing the information as personal information so that not just any user can access it;
● establishing the information as group information so that a user not belonging to the group cannot access it;
● establishing the information as global information so that any user can access it.
